(19) **Europäisches Patentamt**
**European Patent Office**
**Office européen des brevets**

(11) **EP 4 571 983 A1**

(12) **EUROPEAN PATENT APPLICATION**

(43) Date of publication:
**18.06.2025 Bulletin 2025/25**

(21) Application number: **24208694.0**

(22) Date of filing: **24.10.2024**

(51) International Patent Classification (IPC):
*H01M 50/291* (2021.01)   *H01M 50/211* (2021.01)

(52) Cooperative Patent Classification (CPC):
**H01M 50/291; H01M 50/211**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.12.2023 KR 20230178497**

(71) Applicant: **Samsung SDI Co., Ltd.
Gyeonggi-do 17084 (KR)**

(72) Inventors:
• **HUR, Sang Do
17084 Yongin-si (KR)**
• **WANG, Han Jun
17084 Yongin-si (KR)**

(74) Representative: **Marks & Clerk LLP
15 Fetter Lane
London EC4A 1BW (GB)**

(54) **BATTERY PACK**

(57)    A battery pack including a plurality of battery cells, and a fixing member between the battery cells to fix the battery cells, wherein the fixing member has a plurality of through-holes passing from one end thereof to another end thereof.

Fig. 2

EP 4 571 983 A1

**Description**

**BACKGROUND**

**1. Field**

Aspects of embodiments of the present disclosure relate to a battery pack.

**2 Description of the Related Art**

Secondary batteries are batteries that can be charged and discharged, unlike primary batteries, which cannot be recharged. Low-capacity batteries in which one battery cell is packaged in a pack form are used in small portable electronic devices such as smartphones and digital cameras, while high-capacity batteries in the form of a module in which tens to hundreds of battery packs are connected are used as power sources to drive motors for hybrid vehicles, electric vehicles, power tools, hand cleaners, or drones, or as energy storage devices.

A battery pack can be configured using either circular cells or pouch cells. When the battery pack is configured using pouch cells, the output power per area may be increased as compared to circular cells, and the weight of the pack can be reduced. A secondary battery may include an electrode assembly composed of a positive electrode and a negative electrode, a case accommodating the electrode assembly, and electrode terminals connected to the electrode assembly.

The above information disclosed in this background section is only for enhancement of understanding of the background of the present disclosure, and therefore may include information that does not constitute the related art.

**SUMMARY**

Aspects of embodiments of the present disclosure may be directed to providing a battery pack in which perforated holes are formed/defined in a fixing member disposed between, and configured to fix, respective battery cells so that battery cell movement may be suppressed, and so that battery cell swelling may be absorbed.

However, aspects and features of the present disclosure are not limited to those described above, and other aspects and features that are not mentioned may be clearly understood by those skilled in the art from the description of the present disclosure provided below.

An aspect of the present disclosure provides a battery pack including: a plurality of battery cells in which an electrode assembly having one or more electrode tabs is accommodated in a case; and a fixing member between, e.g. disposed between, and configured to fix the plurality of battery cells, wherein the fixing member having a plurality of through-holes passing from one end thereof to another end thereof.

The fixing member may have a hexahedral shape composed of: four side surfaces; and two wide surfaces, each of the wide surfaces contacting or configured to contact a respective battery cell of the plurality of battery cells.

The plurality of through-holes of the fixing member may pass, e.g. may be formed to pass, from one of the side surfaces to another of the side surfaces opposite thereto.

The plurality of through-holes may be side by side, e.g. disposed side by side

The plurality of through-holes may be parallel to, e.g. formed parallel to, a longitudinal direction of the plurality of battery cells.

The plurality of through-holes may be parallel to, e.g. formed parallel to a direction in which the electrode tabs of the plurality of battery cells protrude.

The plurality of through-holes may be perpendicular to, e.g. formed perpendicular to, a longitudinal direction of the plurality of battery cells.

The plurality of through-holes may comprise a first through-hole parallel to, e.g. formed parallel to, a longitudinal direction of the plurality of battery cells, and a second through-hole perpendicular to, e.g. formed perpendicular to, the longitudinal direction of the plurality of battery cells.

The first through-hole and the second through-hole may intersect each other perpendicularly. The first through-hole and the second through-hole may cross each other.

An area of at least one of the wide surfaces of the fixing member may be less than or equal to an area of a surface of the respective battery cell with which said wide surface is in contact or configured to contact.

Each of the plurality of through-holes may have a circular cross section.

Each of the plurality of through-holes may have an oval cross section with a long axis parallel to a width direction of the battery cell.

A material of the fixing member may be or may include one of silicone rubber, urethane, and ethylene vinyl acetate (EVA).

A minimum diameter of the through-holes may be in response to a compression rate of the fixing member according to swelling of the battery cell. A minimum diameter of the through-holes may correspond to a compression rate of the fixing member based on swelling of the battery cell.

The fixing member may further comprise an adhesive member at, e.g. attached to or configured for attachment to, one or both of the wide surfaces.

A minimum thickness of the fixing member, which is a thickness of a portion of the fixing member between one of the wide surfaces and one of the through-holes, may be 10% or about 10% to 30% or about 30% of a maximum thickness of the fixing member including the adhesive member or members.

A material of the adhesive member may be, or may comprise, an acrylic material.

The adhesive member may have an adhesive strength of or about 1300 g/25.4 mm or more.

The adhesive member may have a thickness of or about 10% or less than a thickness of a remainder of the fixing member excluding the adhesive member.

The plurality of battery cells may be stacked.

At least some of the above and other features of the invention are set out in the claims.

## BRIEF DESCRIPTION OF DRAWINGS

FIG. 1 is a perspective view of a battery cell according to an embodiment of the present disclosure.

FIG. 2 is a perspective view of a battery pack composed of battery cells of FIG. 1.

FIG. 3 is a perspective view of a fixing member in which through-holes are formed parallel to a longitudinal direction (y-axis direction) of the battery cell according to an embodiment of the present disclosure.

FIG. 4 is a perspective view of a fixing member in which through-holes are formed perpendicular to the longitudinal direction (y-axis direction) of the battery cell according to an embodiment of the present disclosure.

FIGS. 5A and 5B are a perspective view and a cross-sectional view of a fixing member in which through-holes are formed parallel to and perpendicular to the longitudinal direction (y-axis direction) of the battery cell according to an embodiment of the present disclosure.

FIG. 6 is a front view of a fixing member in which circular through-holes are formed according to an embodiment of the present disclosure.

FIG. 7 is a front view of a fixing member in which oval through-holes are formed according to an embodiment of the present disclosure.

## DETAILED DESCRIPTION

Hereinafter, example embodiments of the present disclosure will be described in detail with reference to the accompanying drawings. Before elaborating, terms or words used in this specification and claims should not be interpreted only with ordinary or dictionary meanings, and should be interpreted with meanings and concepts consistent with the technical idea of this disclosure, based on the principle that the inventor may properly define the concept of the term to explain his or her invention in the best way. Accordingly, it is to be understood that the embodiments described herein and the configurations illustrated in the drawings are only some of the most example embodiments of the present disclosure and are not intended to be exhaustive of the technical ideas of the present disclosure, and that there may be various equivalents and variations that may be substituted therefor at the time of filing this application.

In addition, the terms "comprise," "include," "comprising," and/or "including," used in this specification specify the presence of stated features, numbers, steps, operations, elements, and/or components, but do not preclude the presence or addition of one or more other features, numbers, steps, operations, elements, components, and/or groups thereof.

In addition, in order to help understanding of the present invention, the attached drawings may not be shown at the actual scale, and the dimensions of some components may be exaggerated. In addition, the same reference numbers may be assigned to the same components in different embodiments.

Two comparison targets being described as "the same" means that they are "substantially the same." Therefore, "substantially the same" may include deviations that are considered to be low in the art, for example, deviations of less than 5%. In addition, uniformity of any parameter in a predetermined region may mean uniformity from an average point of view.

Although the terms "first," "second," and the like are used to describe various components, these components are not limited by these terms. These terms are used only to distinguish one component from another component, and unless the content clearly indicates otherwise, the first component may also be a second component.

Throughout the specification, unless the content clearly indicates otherwise, each component may be singular or plural.

The arrangement of a first component on the "upper portion (or lower portion)" of a second component or the "top (or bottom)" of the second component means that the first component is disposed in contact with the top surface (or bottom surface) of the second component, and other components may also be interposed between the first component and the second component disposed on (or under) the first component.

It will be understood that when an element is described as being "on," "connected to," or "coupled to" another element, these elements may be directly connected or coupled to each other, or other elements may be "interposed" between the elements, or the elements may be "connected," "combined," or "coupled" through other elements.

As used herein, the term "and/or" includes any and all combinations of one or more of the associated listed items. In addition, the use of "may" when describing embodiments of the present disclosure relates to "one or more embodiments of the present disclosure." Expressions such as "one or more" and "one or more" before a list of elements modify the entire list of elements and do not modify individual elements in the list.

Throughout the specification, "A and/or B," unless the content clearly indicates otherwise, means A, B, or A and B, and "C to D," unless the content clearly indicates otherwise, means C or more and D or less.

When phrases such as "at least one of A, B, and C," "at least one of A, B, or C," "at least one selected from the group A, B, and C," or "at least one selected from A, B, and C" are used to specify a list of elements A, B, and C, the phrases may refer to any and all suitable combinations.

The term "use" may be considered synonymous with the term "utilize." As used herein, the terms "substantially," "about," and similar terms are used as terms of approximation rather than terms of degree, and the terms are intended to take into account intrinsic fluctuations in measured or calculated values that will be recognized by those having ordinary skill in the technical field to which the present invention belongs.

Although terms such as "first," "second," "third," and the like may be used herein to describe various elements, components, regions, layers and/or sections, these elements, components, regions, layers and/or sections should not be limited by these terms. These terms are used to distinguish one element, component, region, layer, or cross-section from another element, component, region, layer, or cross-section. Accordingly, the first element, component, region, layer, or section discussed below may be referred to as a second element, component, region, layer, or section without departing from the teachings of illustrative embodiments.

As shown in the drawings, spatially relative terms such as "beneath," "below," "lower," "above," "upper," and the like may be used in the present specification to describe the relationship between one element or feature and another element(s) or feature(s) for convenience of description. It will be understood that the spatially relative position is intended to encompass different directions of the device in use or operation in addition to the directions depicted in the drawings. For example, if a device in the drawing is overturned, an element described as "below" or "beneath" is understood as another element described as "upper" or "above." Accordingly, the term "below" may include both the "up" and "down" directions.

The terms used in this specification are intended to describe embodiments of the present disclosure and are not intended to limit the present disclosure.

Hereinafter, in the illustrative examples of a prismatic battery according to an embodiment of the present disclosure, a battery selected from one of the prismatic batteries is described as having a general structure. The general structure of the prismatic battery is described with respect to a generally applied technology. However, the present disclosure is not limited thereto, and a case may be configured in various shapes, such as a circular shape or a pouch shape. In one or more embodiments, the case may be made of a metal, such as aluminum, an aluminum alloy, or nickel-plated steel, or may be made of a laminated film or plastic for forming a pouch.

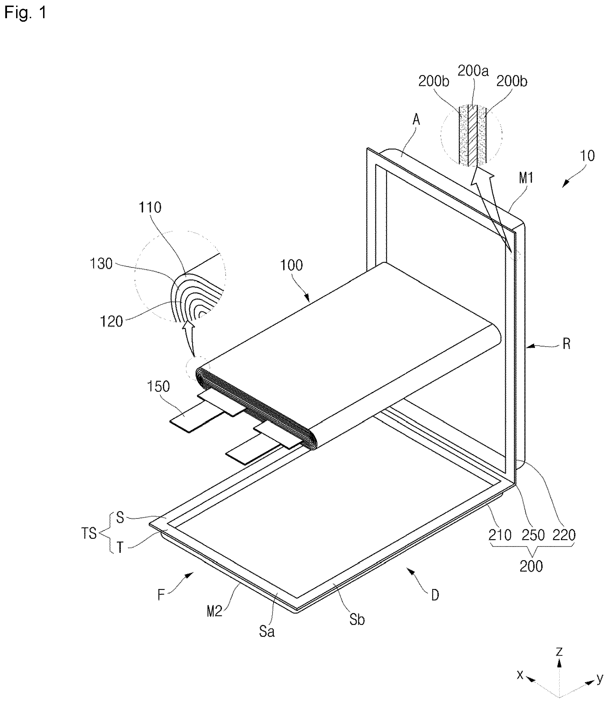

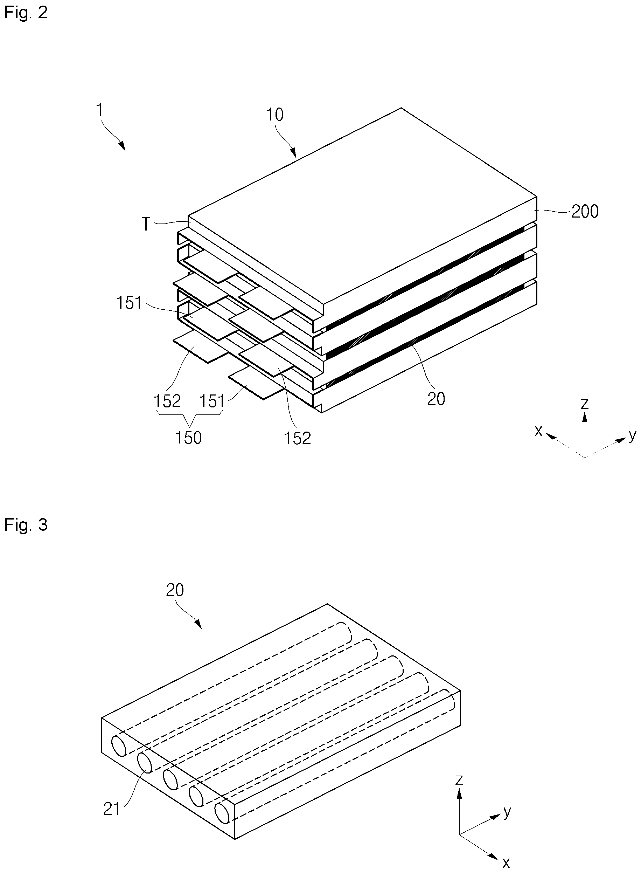

FIG. 1 is a perspective view of a battery cell 10 according to an embodiment of the present disclosure, and FIG. 2 is a perspective view of a battery pack 1 composed of a plurality of the battery cells 10 of FIG. 1.

The battery cell 10 may be a battery cell of a circular type, a prismatic type, or a pouch type, depending on a shape of the battery, but in the embodiment shown in FIG. 1 the battery cell 10 is of the pouch type.

The battery pack 1 according to the embodiment of the present disclosure may include two or more battery cells 10 (four battery cells 10 are shown in FIG. 2). A cell holder (not shown) may be used to assemble the battery cells 10. The cell holder functions to support the plurality of battery cells 10, and the plurality of battery cells 10 are assembled to be inserted into the cell holder to maintain a fixed position. The cell holder may structurally bundle-bind the plurality of battery cells 10 into a module unit. The plurality of battery cells 10 may be arranged in one direction so that respective wide surfaces of the battery cells 10 face each other.

In one or more embodiments, the battery pack 1 may include one or more battery modules (not shown) in which the plurality of battery cells 10 are assembled, and a pack housing (not shown) in which an accommodating space is formed to accommodate the one or more battery modules. The battery module may include the plurality of battery cells 10 and a module housing.

The battery cell 10 may include a receiving part A that accommodates an electrode assembly 100, and a sealing part TS extending along an edge of the receiving part A to seal the receiving part A. The electrode assembly 100 may be in, e.g. formed in, a roll form in which first and second electrode plates 110 and 120, face each other, and are wound with a separator 130 interposed therebetween. Alternatively, the electrode assembly 100 may be in, e.g. formed in, a stack form in which the first and second electrode plates 110 and 120 are stacked with a separator 130 interposed therebetween.

An electrode tab 150 forming a charge and discharge path may be connected to the electrode assembly 100. The electrode tab 150 may include two electrode tabs 150 of different polarities that are electrically connected to the electrode assembly 100. The electrode tab 150 connected to the electrode assembly 100 within the receiving part A may be drawn outward through a front surface F of the receiving part A. That is, the electrode tab 150 may include a positive electrode tab 151 and a negative electrode tab 152.

The receiving portion A in which the electrode assembly 100 is accommodated may be formed in a substantially rectangular parallelepiped shape. In some examples, an exterior of the battery cell 10 may generally follow an exterior of the receiving part A.

In one or more embodiments, the receiving portion A may include the front surface F from which the electrode tab 150 is drawn, and a rear surface R opposite to the front surface F. The receiving portion A may include a pair of main surfaces M1, M2 connecting the front surface F and the rear surface R, and a pair of side surfaces D connecting the front surface F and the rear surface R. The main surfaces M1, M2 may occupy the largest area among the surfaces of the receiving portion A. The main surfaces M1, M2 and the side surfaces D may be respectively formed as pairs at positions opposite to each other. For example, the main surfaces M1, M2 may include first main surface M1 and second main surface M2 facing and/or opposite to each other. In one or more embodiments, the electrode assembly 100 is formed on the first and second main surfaces M1 and M2 of the receiving portion A, but a recess having a depth may be formed in only one of the first or second main surfaces M1 or M2 to accommodate the electrode assembly 100.

The receiving part A for accommodating the electrode assembly 100, and the sealing part TS for sealing the receiving part A, may be formed from an exterior finishing material 200 continuously formed to surround the electrode assembly 100. The exterior finishing material 200 may be formed of a flexible exterior finishing material, such as a pouch. In one or more embodiments, the exterior finishing material 200 may include a metal layer 200a, such as an aluminum sheet, and may include an insulating layer 200b, such as a resin coating layer formed on both surfaces of the metal layer 200a. In this case, the metal layer 200a may be exposed to an exterior through a cross section where the exterior finishing material 200 terminates.

In some examples, the exterior finishing material 200 may include first and second exterior finishing materials 210 and 220 that are coupled to face each other with the electrode assembly 100 interposed therebetween. With the electrode assembly 100 interposed between the first and second exterior finishing materials 210 and 220, the first and second exterior finishing materials 210 and 220 may be folded to be stacked on each other through a folding portion 250 that connects the first and second exterior finishing materials 210 and 220 to each other. Thereafter, the portions in contact with each other along the edge areas of the first and second exterior finishing materials 210 and 220 may be bonded to each other by heat fusion or the like, such that the inner areas of the first and second exterior finishing materials 210 and 220, which face each other with the electrode assembly 100 interposed therebetween, may be formed as a receiving part A, and such that the edge areas of the first and second exterior finishing materials 210 and 220 bonded to each other may be formed as the sealing part TS.

The sealing part TS may include a terrace portion T extending toward the front surface F of the receiving portion A, and a side sealing portion S extending toward the side surface of the receiving portion A. In this case, the electrode tab 150 connected to the electrode assembly 100 within the accommodating part A may be drawn out of the receiving portion A through the terrace portion T extending toward the front surface F of the receiving portion A. In one or more embodiments, a protection circuit module may be seated on the terrace portion T, and the electrode tab 150 drawn out through the terrace portion T may be bent to be connected to the protection circuit module seated on the terrace portion T.

The side sealing portion S may include a main body Sb of the side sealing portion S at a position corresponding to the receiving part A, and a front end Sa of the side sealing portion S extending from the main body Sb of the side sealing portion S to a position separated from the receiving part A. The side sealing portion S may be folded toward the receiving portion A to reduce an area occupied by the entire battery cell 10.

A battery pack that is required to provide high output power, such as a battery pack for power tools and hand cleaners, may be generally composed of circular cells assembled to be connected in series and parallel. Pouch cells may be used to increase output power per area while lowering a weight of the pack. In a pack configuration using the pouch cells, each of the cells may be stacked in a stack type to be configured within a secured area, unlike circular cells. To stack the pouch cells, the cells may be assembled and fixed using a fixing member, such as a fixing tape.

A material of the fixing tape may be polyurethane, silicone, etc. The suitable performance of a fixing tape may include a corresponding level of adhesion to mechanically combine and connect each cell (high adhesion treatment), and materials to reduce or minimize the cell movement in the longitudinal direction (y-direction) of each cell in the event of external impact, such as falling (high hardness material) should be employed. To reduce or minimize dead space due to tape volume (thickness), it may be suitable to have a cushion (compression) force to absorb swelling that occurs during a decrease in the lifetime of the pouch cell.

However, there may generally be a trade-off between high-hardness materials for movement suppression, and materials with an excellent compression rate. For example, with respect to cushioning materials (e.g., sponge and rubber), for the sponge type (e.g., a material with an excellent compression rate), the thickness may be selected by reflecting cell swelling as much as the compression rate, although cell movement may not be suppressed, and as a result some cells may be impacted in a fall. A rubber type (e.g., a material with relatively high hardness) may be effective in suppressing the movement of the cell, although a rubber type might not be effective in absorbing the amount of cell swelling, which may result in volume loss.

One or more embodiments of the present disclosure provide a fixing member 20 capable of securing high hardness materials to as to suppress movement of the battery cell 10 in the longitudinal direction (y-direction), and securing a material with high compression rate to absorb swelling in the stacked direction (z-direction). In some examples, the fixing member 20 may be manufactured with a design in which the through-holes are formed in the fixing member, based on a material with a high hardness, by an extrusion molding method. In the longitudinal direction (y-direction) of the battery cell 10, hardness of a raw material may be maintained as much as possible to suppress the movement of the cell, and in the stacked direction (z-direction), the compression rate may be increased by perforated holes when an external force (cell swelling) is applied. A structure of the fixing member 20 will be described below.

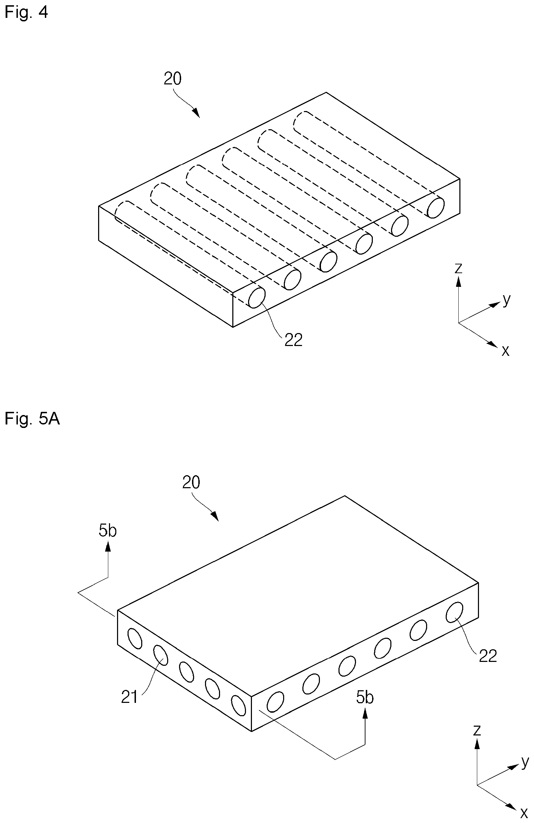

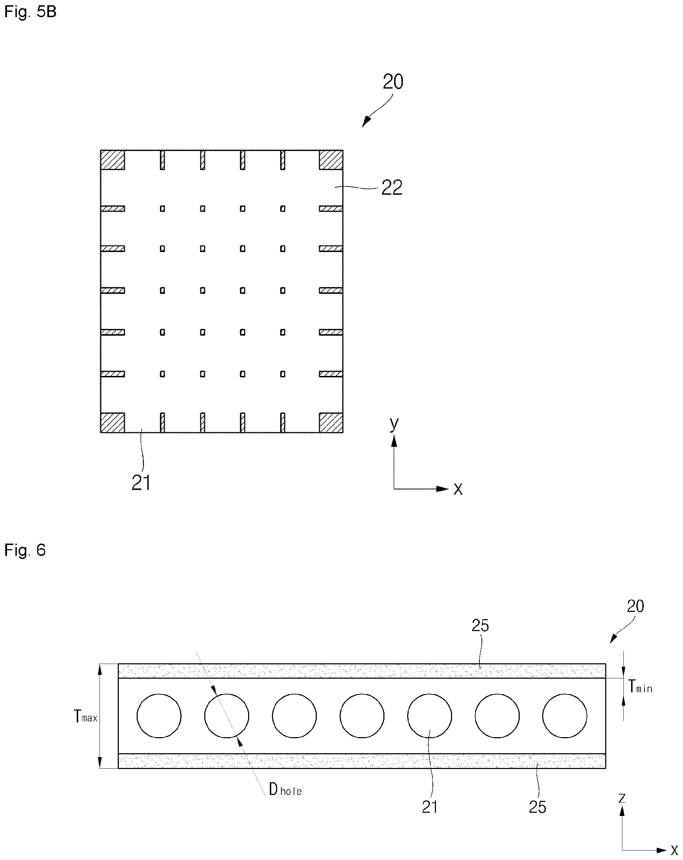

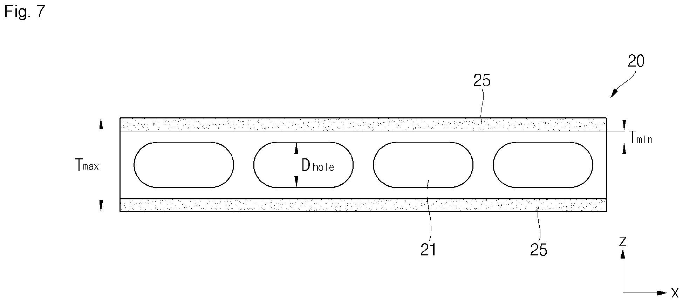

FIG. 3 is a perspective view of a fixing member in which through-holes are formed parallel to the longitudinal direction y of the battery cell according to an embodiment of the present disclosure. FIG. 4 is a perspective view of a fixing member in which through-holes are formed perpendicular to the longitudinal direction y of the battery cell according to an embodiment of the present disclosure. FIGS. 5A and 5B are a perspective view and a cross-sectional view of a fixing member in which through-holes are formed parallel and perpendicular to the longitudinal direction y of the battery cell according to an embodiment of the present disclosure. FIG. 6 is a front view of a fixing member in which circular through-holes are formed according to an embodiment of the present disclosure. FIG. 7 is a front view of a fixing member in which oval through-holes are formed according to an embodiment of the present disclosure.

FIGS. 3 to 7 are drawings showing enlarged views of fixing members 20. In the drawings, sizes of the through-holes 21,22 and intervals between the through-holes 21,22 may be exaggerated for ease of explanation.

Referring to FIGS. 3 to 7, a plurality of through-holes 21 and 22 are formed to pass through the fixing member 20 from one end to the other end of the fixing member 20. In some examples, the fixing member 20 may have a hexahedral shape composed of four side surfaces and two wide surfaces in individual contact with respective ones of the plurality of battery cells 10, and located between adjacent battery cells 10. The plurality of through-holes 21 and 22 of the fixing member 20 may pass, e.g. may be formed to pass, from one side surface among the four side surfaces to a side surface opposite thereto. The through-holes 21 and 22 may be disposed and/or located side by side.

Referring to FIG. 3, the plurality of through-holes 21 may be parallel to, e.g. formed parallel to, the longitudinal direction (y-direction) of the plurality of the battery cells 10. In some examples, the plurality of through-holes 21 may be parallel to, e.g. formed parallel to, the direction (y-direction) in which the electrode tabs 150 of the plurality of battery cells 10 protrude. Since a portion of the electrode tab 150 that protrudes may be most vulnerable in a fall, the plurality of through-holes 21 may correspond to, e.g. may be formed to correspond to, the longitudinal direction (y-direction) of the plurality of battery cells 10 in line with the portion of the electrode tab 150.

However, the present disclosure is not limited thereto, and referring to FIG. 4, the plurality of through-holes 22 may be perpendicular to, e.g. formed perpendicular to, the longitudinal direction (y-direction) of the plurality of the battery cells 10.

FIG. 5A is a perspective view of a fixing member 20 in which one or more first through-holes 21 and one or more second through-holes 22 are in, e.g. formed in, the y- and x-directions, respectively. FIG. 5B is a cutaway plan view taken along line 5b-5b of FIG. 5A. Referring to FIGS. 5A and 5B, a plurality of through-holes 21 and 22 are provided and include first through-holes 21 parallel to, e.g. formed parallel to, the longitudinal direction (y-direction) of the plurality of battery cells 10, and second through-holes 22 perpendicular to, e.g. formed perpendicular to, the longitudinal direction (y-direction) of the plurality of battery cells 10. In this case, the first through-holes 21 and the second through-holes 22 may intersect each other.

Referring to FIG. 6, the cross-section of the plurality of through-holes 21 and 22 may be a circular shape. Referring to FIG. 7, the cross-section of the plurality of through-holes 21 and 22 may be formed in an oval or a substantially oval shape with a relatively long axis in a direction parallel to a width direction (x-direction) of the battery cell 10.

In some examples, a material of the fixing member 20 may be one of silicone rubber, urethane, or ethylene vinyl acetate (EVA). The present disclosure is not limited thereto, and various synthetic rubbers with high hardness may be applied.

Referring to FIGS. 6 and 7, the fixing member 20 may further include adhesive members 25, each adhesive member 25 attached to one of the two wide surfaces. In some examples, a material of the adhesive member 25 may be acrylic, but the present disclosure is not limited thereto, and various materials of adhesive strength may be applied. The adhesive strength of the adhesive member 25 may be 1300 g/25.4 mm or about 1300 g/25.4 mm or more. When the adhesive strength of the adhesive member 25 is less than 1300 g/25.4 mm or about 1300 g/25.4 mm, the interface may be separated when the battery pack 1 is dropped. A thickness of the adhesive member 25 may be 10% or about 10% or less compared to a thickness of the fixing member 20 excluding the adhesive member 25.

Further, a minimum thickness $T_{min}$ of the fixing member 20, which is a thickness of a portion of the fixing member 20 between one of the wide surfaces and one of the through-holes 21 and 22, may range from 10% or about 10% to 30% or about 30% compared to the total thickness $T_{max}$ of the fixing member 20 including the adhesive members 25. For example, when the minimum thickness $T_{min}$ of the fixing member 20 is less than 10% or about 10% of the total thickness $T_{max}$ of the fixing member 20, the strength of the fixing member 20 is reduced so that a force for movement suppression may be reduced, and when the minimum thickness $T_{min}$ exceeds 30% or about 30% of the total thickness $T_{max}$, a force for swelling absorption may be reduced.

In some examples, and referring to Equations 1, 2, and 3 below, the total thickness $T_{max}$ and the minimum thickness $T_{min}$ of the fixing member 20, and a minimum diameter $D_{hole}$ of the through-holes 21 and 22 are determined based on a thickness BT of the battery cell 10, a set swelling rate SR, and a set compression rate CR. The set swelling rate SR represents a maximum swelling rate value compared to the thickness BT of the battery cell 10, and may be a preset value. The set compression rate CR represents a maximum compression rate of the fixing member 20 at the set swelling rate SR, and may be a preset value.

For example, the total thickness $T_{max}$ and the minimum thickness $T_{min}$ of the fixing member 20, and the minimum diameter $D_{hole}$ of the through-holes 21 and 22, may be calculated based on Equations 1, 2, and 3 below. AT is a thickness of the adhesive member 25.

### Equation 1

$$T_{max} = (BT \times SR) + \{((BT \times SR) \div 2) \times CR + (AT \times 2)\}$$

### Equation 2

$$D_{hole} = (BT \times SR) \div 2$$

### Equation 3

$$T_{min} = \{(T_{max} - (AT \times 2)) - D_{hole}\} \div 2$$

For example, when the thickness BT of the battery cell is 6mm or about 6 mm, the set swelling rate SR is 8% or about 8%, the set compression rate CR is 50% or about 50%, and the thickness AT of the adhesive member is 0.05 mm or about 0.05 mm, the total thickness $T_{max}$ of the fixing member 20 is 0.7 mm or about 0.7 mm, the minimum diameter $D_{hole}$ of the through-holes 21 and 22 is 0.24 mm or about 0.24 mm, and the minimum thickness $T_{min}$ of the fixing member 20 is 0.18 mm or about 0.18 mm.

In one or more embodiments, the total thickness $T_{max}$ and the minimum thickness $T_{min}$ of the fixing member 20, and the minimum diameter $D_{hole}$ of the through-holes 21 and 22, may be calculated based on the thickness BT of the battery cell 10, the set swelling rate SR, and the set compression rate CR. The minimum diameter $D_{hole}$ of the through-holes 21 and 22 may be formed in response to the compression rate of the fixing member 20 according to the swelling of the battery cell 10.

In one or more embodiments, the area of the wide surface of the fixing member 20 may be less than or equal to the area of the battery cell 10 in contact with the wide surface. The area of the wide surface of the fixing member 20 is formed to be less than or equal to an area of a stacked surface of the battery cells 10 so that the battery cells 10 may be attached to be fixed when the battery cells 10 are stacked.

According to one or more embodiments of the present disclosure, to fix battery cells among the battery cells in a battery pack, a plurality of perforated holes, which pass through a fixing member from one side to the other side of the fixing member in a direction parallel to an attachment surface of the cell, may be formed to ensure hardness for suppressing cell movement, and to ensure a compressive force for absorbing cell swelling, thereby reducing or minimizing dead space due to a volume (thickness) of the fixing member, and thereby improving product reliability.

Embodiments are set out in the following clauses:

Clause 1. A battery pack comprising: a plurality of battery cells in which an electrode assembly having one or more electrode tabs is accommodated in a pouch case; and a fixing member disposed between and configured to fix the plurality of battery cells, wherein the fixing member having a plurality of through-holes through the fixing member from one end to the other end of the fixing member.

Clause 2. The battery pack of Clause 1, wherein the fixing member has a hexahedral shape composed of four side surfaces and two wide surfaces in individual contact with the plurality of battery cells between the plurality of battery cells.

Clause 3. The battery pack of Clause 2, wherein the plurality of through-holes of the fixing member are formed to pass from one side surface among the four side surfaces to a side surface opposite to the one side surface.

Clause 4. The battery pack of Clause 3, wherein the plurality of through-holes are formed parallel to a longitudinal direction of the plurality of battery cells.

Clause 5. The battery pack of Clause 3, wherein the plurality of through-holes are formed parallel to a direction in which the electrode tabs of the plurality of battery cells protrude.

Clause 6. The battery pack of Clause 3, wherein the plurality of through-holes are formed perpendicular to a longitudinal direction of the plurality of battery cells.

Clause 7. The battery pack of Clause 3, wherein the plurality of through-holes are disposed side by side.

Clause 8. The battery pack of Clause 2, wherein the plurality of through-holes comprise a first through-hole formed parallel to a longitudinal direction of the plurality of battery cells, and a second through-hole formed perpendicular to the longitudinal direction of the plurality of battery cells.

Clause 9. The battery pack of Clause 8, wherein the first through-hole and the second through-hole intersect each other perpendicularly.

Clause 10. The battery pack of Clause 2, wherein an area of the wide surface of the fixing member is smaller than or equal to an area of the battery cell in contact with the wide surface.

Clause 11. The battery pack of Clause 1, wherein each of the plurality of through-holes has a cross section in a circular shape.

Clause 12. The battery pack of Clause 1, wherein each of the plurality of through-holes has a cross section in an oval shape with a relatively long length in a direction parallel to a width direction of the battery cell.

Clause 13. The battery pack according to Clause 1, wherein a material of the fixing member is one of silicone rubber, urethane, and ethylene vinyl acetate (EVA).

Clause 14. The battery pack of Clause 1, wherein a minimum diameter of the plurality of through-holes is in response to a compression rate of the fixing member according to swelling of the battery cell.

Clause 15. The battery pack of Clause 1, wherein the fixing member further comprises an adhesive member attached to each of two wide surfaces in contact with the battery cell.

Clause 16. The battery pack of Clause 15, wherein a minimum thickness of the fixing member, which is a thickness of a portion in which the plurality of through-holes are formed, is 10% to 30% of a total thickness of the fixing member including the adhesive member.

Clause 17. The battery pack of Clause 15, wherein a material of the adhesive member is acrylic.

Clause 18. The battery pack of Clause 15, wherein the adhesive member has an adhesive strength of 1300 g/25.4 mm or more.

Clause 19. The battery pack of Clause 15, wherein the adhesive member has a thickness of 10% or less compared to a thickness of the fixing member excluding the adhesive member.

Clause 20. The battery pack of Clause 1, wherein the plurality of battery cells are stacked in a stack type.

The effects that can be achieved through the present disclosure are not limited to the above-described effects, and other technical effects that have not been mentioned can be clearly understood by those skilled in the art from the description of the present disclosure described below.

The above description is merely for implementing examples of the secondary battery pack according to the present disclosure, and accordingly, it will be understood by those having ordinary skill in the field to which the present disclosure belongs that the present disclosure is not limited to the above embodiments and that various modifications may be made without departing from the scope of the present disclosure as defined by the following claims. That is, although the present disclosure has been described with limited examples and drawings, it is not limited thereto, and various modifications and changes are possible within the scope of the present disclosure and the scope of the claims to be described below by those having ordinary skill in the technical field to which the present disclosure belongs.

## Claims

1. A battery pack comprising:

   a plurality of battery cells in which an electrode assembly having one or more electrode tabs is accommodated in a case; and
   a fixing member disposed between and configured to fix the plurality of battery cells,
   wherein the fixing member having a plurality of through-holes passing from one end thereof to the other end thereof.

2. The battery pack of claim 1, wherein the fixing member has a hexahedral shape composed of:

four side surfaces; and
two wide surfaces, each of the wide surfaces contacting or configured to contact a respective battery cell of the plurality of battery cells.

3. The battery pack of claim 2, wherein the plurality of through-holes of the fixing member pass from one of the side surfaces to another of the side surfaces opposite thereto,
and wherein optionally the plurality of through-holes are side by side.

4. The battery pack of claim 1, 2 or 3, wherein at least one of:

the plurality of through-holes are parallel to a longitudinal direction of the battery cells;
the plurality of through-holes are parallel to a direction in which the electrode tabs protrude.

5. The battery pack of claim 1, 2 or 3, wherein the plurality of through-holes are perpendicular to a longitudinal direction of the plurality of battery cells.

6. The battery pack of claim 1, 2 or 3, wherein the plurality of through-holes comprise a first through-hole parallel to a longitudinal direction of the plurality of battery cells, and a second through-hole perpendicular to the longitudinal direction of the plurality of battery cells,
and wherein optionally the first through-hole and the second through-hole intersect each other.

7. The battery pack of any one of claims 2 to 6, wherein an area of at least one of the wide surfaces of the fixing member is less than or equal to an area of a surface of the respective battery cell in contact with or configured for contact with said wide surface.

8. The battery pack of any preceding claim, wherein one of:

each of the plurality of through-holes has a circular cross section;
each of the plurality of through-holes has an oval cross section with a long axis parallel to a width direction of the battery cell.

9. The battery pack of any preceding claim, wherein a material of the fixing member is or includes one of silicone rubber, urethane, and ethylene vinyl acetate (EVA).

10. The battery pack of any preceding claim, wherein a minimum diameter of the plurality of through-holes is in response to a compression rate of the fixing member according to swelling of the battery cell.

11. The battery pack of any one of claims 2 to 10, wherein the fixing member further comprises an adhesive member at one or both of the two wide surfaces.

12. The battery pack of claim 12, wherein at least one of:

a minimum thickness of the fixing member, which is a thickness of a portion of the fixing member between one of the wide surfaces and one of the through-holes, is 10% or about 10% to 30% or about 30% of a maximum thickness of the fixing member including the adhesive member or members;
the adhesive member has a thickness of or about 10% or less than a thickness of a remainder of the fixing member.

13. The battery pack of claim 11 or 12, wherein a material of the adhesive member is or comprises an acrylic material.

14. The battery pack of claim 11, 12 or 13, wherein the adhesive member has an adhesive strength of or about 1300 g/25.4 mm or more.

15. The battery pack of any preceding claim, wherein the plurality of battery cells are stacked.

Fig. 1

Fig. 2

Fig. 3

Fig. 4

Fig. 5A

Fig. 5B

20

22

21

y

x

Fig. 6

20

25

$T_{max}$

$T_{min}$

$D_{hole}$

21

25

z

x

Fig. 7

Europäisches
Patentamt

European
Patent Office

Office européen
des brevets

# EUROPEAN SEARCH REPORT

**Application Number**

EP 24 20 8694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/210931 A1 (LG ENERGY SOLUTION LTD [KR]) 2 November 2023 (2023-11-02) | 1-3,10, 15 | INV. H01M50/291 H01M50/211 |
| Y | * figures 2,3 * | 6 | |
| X | US 10 347 881 B2 (SAMSUNG SDI CO LTD [KR]) 9 July 2019 (2019-07-09) * figure 4 * | 1,4,7 | |
| X | JP 2011 096465 A (TOKYO R & D KK) 12 May 2011 (2011-05-12) * figure 1 * | 1,5 | |
| X | CN 113 924 687 A (PANASONIC IP MAN CO LTD) 11 January 2022 (2022-01-11) * figure 4 * | 1,8, 11-14 | |
| X | US 2021/328251 A1 (ZHAO FENGGANG [CN] ET AL) 21 October 2021 (2021-10-21) * figure 4 * * paragraph [0060] * | 1,9 | |
| Y | WO 2021/039549 A1 (PANASONIC IP MAN CO LTD [JP]) 4 March 2021 (2021-03-04) * figure 9 * | 6 | **TECHNICAL FIELDS SEARCHED (IPC)** H01M |

The present search report has been drawn up for all claims

| Place of search | Date of completion of the search | Examiner |
|---|---|---|
| The Hague | 25 March 2025 | Beaumont, Arnaud |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

     ..........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 8694

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| WO 2023210931 A1 | 02-11-2023 | EP 4293800 A1<br>JP 2024521611 A<br>US 2025096364 A1<br>WO 2023210931 A1 | 20-12-2023<br>04-06-2024<br>20-03-2025<br>02-11-2023 |
| US 10347881 B2 | 09-07-2019 | CN 106058089 A<br>KR 20160123814 A<br>US 2016308186 A1 | 26-10-2016<br>26-10-2016<br>20-10-2016 |
| JP 2011096465 A | 12-05-2011 | NONE | |
| CN 113924687 A | 11-01-2022 | CN 113924687 A<br>JP 7595281 B2<br>JP WO2021060221 A1<br>US 2022294070 A1<br>WO 2021060221 A1 | 11-01-2022<br>06-12-2024<br>01-04-2021<br>15-09-2022<br>01-04-2021 |
| US 2021328251 A1 | 21-10-2021 | CN 110265591 A<br>EP 3641006 A1<br>US 2021328251 A1<br>US 2022246975 A1<br>WO 2020042411 A1 | 20-09-2019<br>22-04-2020<br>21-10-2021<br>04-08-2022<br>05-03-2020 |
| WO 2021039549 A1 | 04-03-2021 | CN 113906622 A<br>JP 7641582 B2<br>JP WO2021039549 A1<br>US 2022294069 A1<br>WO 2021039549 A1 | 07-01-2022<br>07-03-2025<br>04-03-2021<br>15-09-2022<br>04-03-2021 |

EPO FORM P0459

For more details about this annex : see Official Journal of the European Patent Office, No. 12/82